**Europäisches Patentamt**

**European Patent Office**

**Office européen des brevets**

(19)

(11) Veröffentlichungsnummer : **0 108 974**
**B1**

(12)

# EUROPÄISCHE PATENTSCHRIFT

(45) Veröffentlichungstag der Patentschrift :
03.12.86

(51) Int. Cl.⁴ : **F 16 D 43/12**, F 16 D 13/50

(21) Anmeldenummer : **83110742.0**

(22) Anmeldetag : **27.10.83**

(54) Drehmomentbegrenzende Kupplung.

(30) Priorität : 12.11.82 DE 3241914

(43) Veröffentlichungstag der Anmeldung :
23.05.84 Patentblatt 84/21

(45) Bekanntmachung des Hinweises auf die Patenterteilung : 03.12.86 Patentblatt 86/49

(84) Benannte Vertragsstaaten :
CH DE FR GB IT LI SE

(56) Entgegenhaltungen :
DE-A- 2 203 425
DE-C- 892 097
DE-C- 1 202 712
DE-U- 7 243 689
FR-A- 2 176 388
GB-A- 358 617
US-A- 2 587 712

(73) Patentinhaber : ATEC-Weiss KG
Von-Siemens-Strasse 1
D-4426 Vreden (DE)

(72) Erfinder : Weiss, Hermann
Elbergenerstrasse 18
D-4426 Vreden (DE)
Erfinder : Weiss, Rudolf
Haydenstrasse 13
D-4426 Vreden (DE)

(74) Vertreter : Patentanwaltsbüro Cohausz & Florack
Schumannstrasse 97
D-4000 Düsseldorf 1 (DE)

**Beschreibung**

Die Erfindung bezieht sich auf eine drehmomentbegrenzende Kupplung mit zwei gegen die Kraft einer axial wirkenden ersten Feder außer Eingriff bringbaren Kupplungshälften und einem im Übertragungsweg angeordneten, aus zwei über eine federbelastete Rast in Eingriff gehaltenen Teilen bestehenden Rastgesperre, dessen bei Überschreiten des Grenzmomentes ausrastbar und axial verstellbarer Teil auf die verstellbare Kupplungshälfte einwirkt, wobei dem Sperrer des Rastgesperres eine Steigkurve zugeordnet ist, deren Steilheit auf dem ersten Abschnitt des Verstellweges größer als auf dem sich daran anschließenden Abschnitt ist.

Eine derartige Kupplung ist aus der US-A-2 587 712 bekannt. Das Rastgesperre wird durch eine Feder eingerastet gehalten. Wenn das Drehmoment einen vorgegebenen Wert übersteigt, der von der Federkraft und der Steilheit der Steigkurve abhängt, bewegt sich das ausrastbare und axial verstellbare Teil in axialer Richtung gegen die Federkraft. Dadurch wird der Druck der Feder auf die Kupplungshälften verringert, so daß die Kupplung gelüftet wird. Damit die Kupplung nicht durchrutscht, bevor das Rastgesperre angesprochen hat, sollten die Kupplungshälften mit einer möglichst großen Federkraft beaufschlagt werden. Die Druckbeaufschlagung des Rastgesperres jedoch muß sich nach dem übertragbaren Grenzmoment richten. Um beide Forderungen gleichzeitig erfüllen zu können, muß ein Kompromiß für die das Rastgesperre und die Kupplungshälften gleichzeitig beaufschlagende Feder gefunden werden. Eine optimale Einstellung des Rastgesperres und eine optimale Einstellung der Kupplungshälften ist deshalb nicht gleichzeitig möglich. Aus der DE-U-7 243 689 ist eine ähnliche drehmomentbegrenzende Kupplung bekannt. Bei ihr weist jedoch das Rastgesperre keine Steigkurve mit unterschiedlichen Steigungen auf. Diese Kupplung hat die gleichen Nachteile wie die eingangs genannte bekannte Kupplung.

Der Erfindung liegt die Aufgabe zugrunde, eine Rutschkupplung zu schaffen, mit der die Einstellung des Grenzmomentes ohne Rücksicht auf die Einstellung der Kupplung möglich ist.

Diese Aufgabe wird erfindungsgemäß dadurch gelöst, daß das Rastgesperre alleine von einer zweiten Feder beaufschlagt ist, die beim Ausrasten des Rastgesperres auf dem ersten Abschnitt des Verstellweges des verstellbaren Teiles allein wirksam ist und erst auf dem sich daran anschließenden Abschnitt mit der ersten Feder zusammen das Lüften der Kupplung bewirkt.

Wegen des Einsatzes von individuellen Federn für die Kupplung und das Rastgesperre wird erreicht, daß die Einstellung des Grenzmomentes völlig unabhängig von der Einstellung der Kupplung ist. Erst wenn das Rastgesperre angesprochen hat, d. h., wenn die Rast den ersten Abschnitt des Verstellweges gegen die wirksame Kraft der ersten Feder überwunden hat, wird die zweite Feder wirksam. Durch die Wahl der Neigung des zweiten Abschnittes der Steigkurve ist es möglich, das erforderliche Moment für das Lösen der Kupplung zu bestimmen. Im Grenzfall ist es möglich, die Neigung auf dem zweiten Abschnitt so flach zu wählen, daß trotz der beiden gleichzeitig wirksamen Federn das Moment für die weitere Verstellung bis zum Lösen der Kupplung kleiner als auf dem ersten Abschnitt während des Ausrastens ist.

Nach einer ersten Ausgestaltung der Erfindung besteht die mit dem axial verstellbaren Teil des Rastgesperres drehfest verbundene Kupplungshälfte aus zwei die andere Kupplungshälfte mittels der Kraft der Feder zwischen sich einklemmenden Teilen, von denen ein Teil axial unverschieblich ist und als Widerlager für die das andere Teil abstützende Feder dient. Bei dieser Ausgestaltung wird, wie an sich bekannt, die Kraft einer Feder bzw. eines Federsatzes ausgenutzt, um eine Anpreßkraft an beiden gegenüberliegenden Seiten der anderen Kupplungshälfte zu erzeugen.

Damit gewährleistet ist, daß bei nicht gelüfteter Kupplung die andere Kupplungshälfte mit beiden gegenüberliegenden Seiten an der einen Kupplungshälfte anliegt und bei gelüfteter Bremse die andere Kupplungshälfte auch von dem axial feststehenden Teil der einen Kupplungshälfte abgehoben wird, ist vorgesehen, daß auf die andere Kupplungshälfte eine weitere Feder in Lüftungsrichtung einwirkt, deren Federkraft kleiner als die Kraft der in Gegenrichtung wirkenden Feder der einen Kupplungshälfte ist. Darüber hinaus sollte die axiale Beweglichkeit der anderen Kupplungshälfte durch einen Anschlag auf ein Spiel begrenzt sein, das kleiner als das gesamte Lüftungsspiel zwischen den beiden Teilen der einen Kupphälfte ist. Dadurch wird sichergestellt, daß bei gelüfteter Kupplung die andere Kupplungshälfte mit keiner ihrer beiden gegenüberliegenden Seiten schleift.

Da das Rastgesperre und die Kupplung hintereinandergeschaltet im Kraftübertragungsweg zwischen Antrieb und Abtrieb liegen und das Rastgesperre nur als Auslöseorgan der Kupplung wirkt, ist es nicht erforderlich, daß die beiden Teile des Rastgesperres sich nach Ansprechen des Rastgesperres frei gegeneinander verdrehen können, vielmehr ist vorzugsweise der gegenseitige Verdrehwinkel der beiden Teile des Rastgesperres durch Anschläge begrenzt. Bei dieser Ausgestaltung braucht der eine Teil nur geringfügig zurückgedreht zu werden, um wieder die Raststellung einzunehmen. Für das Einschalten des Rastgesperres ist vorzugsweise ein Schaltring unverdrehbar und axial verschieblich auf einem Teil des Rastgesperres angeordnet und weist eine Weiche auf, die mit einer Nase am anderen Teil des Rastgesperres derart zusammenwirkt, daß das ausgerastete andere Teil durch Axialverstellung des Schaltringes in die Raststellung zurückgeführt wird.

Um unter bestimmten Betriebsbedingungen, bei denen sehr hohe Drehmomente auftreten können, z. B. bei der Direkteinschaltung von Kurzschlußläufermotoren, ein Ansprechen der für geringere Drehmomente eingestellten Kupplung zu verhindern, ist nach einer Ausgestaltung der Erfindung vorgesehen, daß die Weiche des Schaltringes eine solche Ausnehmung für die Aufnahme der Nase am anderen Teil des Rastgesperres hat, daß der Schaltring in seiner axial verschobenen Stellung und das andere Teil in Drehrichtung formschlüssig miteinander verriegelt sind.

Mit diesen ausgestaltenden Merkmalen wird beispielsweise vor der Direkteinschaltung von Kurzschlußläufermotoren die Verriegelung des Schaltringes und des anderen Teils des Rastgesperres vorgenommen. Nach dem Anlauf des Antriebes wird die Verriegelung wieder aufgehoben, so daß die Überlastkupplung bei ihrem Grenzmoment ansprechen kann.

Um das Auslösen des Rastgesperres von Reibungseiflüssen weitgehend frei zu halten, sollte der Sperrer eine frei drehbar gelagerte Kugel oder Rolle sein.

Im folgenden wird die Erfindung anhand einer ein Ausführungsbeispiel darstellenden Zeichnung näher erläutert.

Im einzelnen zeigen

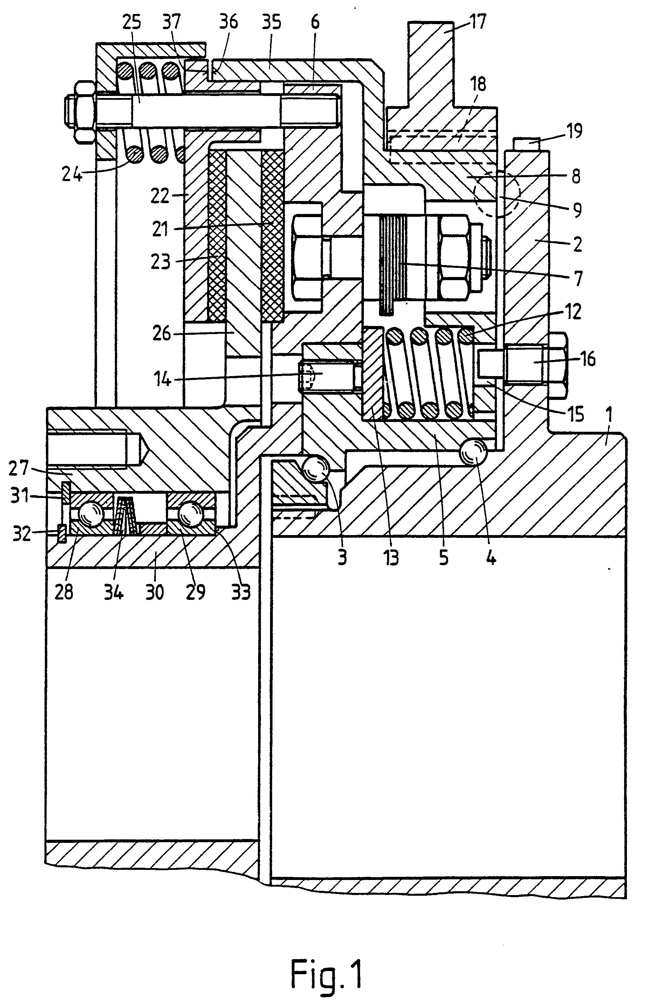

Figur 1 eine drehmomentbegrenzende Kupplung im halben Axialschnitt,

Figur 2 einen Axialschnitt der Kupplung gemäß Fig. 1 im Bereich des Rastgesperres,

Figuren 3 und 4 alternative Ausführungen des Rastgesperres im Axialschnitt,

Figur 5 eine Einschaltvorrichtung für das Rastgesperre im Axialschnitt,

Figur 6 die Einschaltvorrichtung gemäß Fig. 5 im Schnitt nach der Linie I-I und

Figur 7 einen Teil des Rastgesperres gemäß Fig. 2 im Schnitt nach der Linie II-II.

Einstückig mit einer Nabe 1, die an einen Antrieb kuppelbar ist, ist eine beispielsweise als Ring ausgebildete Scheibe 2 ausgeführt. Auf der Nabe 1 ist mittels Kugellager 3, 4 drehbar, aber axial unverschieblich, eine Hülse 5 gelagert. Mit der Hülse 5 ist ein Flansch 6 fest verbunden, an dem über kranzförmig angeordnete Federlaschen-Lamellenpakete 7 ein weiterer Flansch 8 drehfest aber axial beweglich befestigt ist.

Der Flansch 8 und die Scheibe 2 bilden Teile eines Rastgesperres. Zu diesem Rastgesperre gehört als Sperrer eine Kugel 9, die in einer Kunststofflagerung 10 in der Scheibe 2 gehalten ist. Mehrere solcher Sperrer 9 sind am Umfang des Flansches 8 vorgesehen. Jeder diese Kugeln ist in der Scheibe 2 als Rast eine Vertiefung 11 zugeordnet. Durch Federkraft wird der Sperrer 9 in dieser Rast 11 gehalten. Die Federkraft wird von einer Feder 12 aufgebracht, die sich an einem Stellring 13 abstützt und den Flansch 8 in Richtung der Scheibe 2 druckbeaufschlagt. Die Federkraft dieser Feder 12 läßt sich durch in der Hülse 5 angeordnete, auf den Stellring 13 einwirkende Stellschrauben 14 einstellen. Die nach Auslösen des Rastgesperres mögliche gegenseitige Verdrehung der beiden Teile 2, 3 wird durch eine Anschlag begrenzt, der von einer in eine Ausnehmung 15 des Flansches 8 mit Spiel eingreifenden Bolzens 16 gebildet wird.

Auf dem Flansch 8 ist drehfest, aber axial verschlieblich, ein Stellring 17 mit einer Weiche 18 angeordnet, der auf der Scheibe 2 eine Nase 19 zugeordnet ist. Die Weiche 18 hat eine solche Öffnung, daß sie den maximal möglichen Verdrehweg der beiden Teile 2, 8 erfaßt. Mittels einer den Stellring 17 erfassenden Gabel 20 läßt sich der Stellring 17 bei jeder Drehstellung axial verschieben. Die gabelförmige Weiche 18 hat an ihrem Grund eine Ausnehmung 18a, die der Form der Nase 19 angepaßt ist. Ist der Stellring 17 axial so weit verschoben, daß die Nase 19 in der Ausnehmung 18a sich befindet, dann sind der Stellring 2 und der Flansch 8 in Drehrichtung formschlüssig miteinander vedrriegelt, so daß die Rast nicht ausrasten kann.

Der Flansch 6 trägt einen Reibungskupplungsbelag 21 und bildet einen Teil einer Kupplungshälfte. Der Andere Teil dieser Kupplungshälfte wird von einem Flansch 22 gebildet, der ebenfalls einen Kupplungsbelag 23 trägt. Dieser letzt genannte Teil 22 wird von einer Schraubenfeder 24, die mittels eines Schraubenbolzens 25 an dem anderen Teil 6 derselben Kupplungshälfte gehalten ist, druckbeaufschlagt. Zwischen den beiden Teilen 6, 21, 22, 23 ist als andere Kupplungshälfte eine Scheibe 26 angeordnet, die einstückig mit einem nabenförmigen Abtriebsteil 27 ausgeführt ist. Dieses Abtriebsteil 27 ist über Kugellager 28, 29 auf einer einstückig mit dem Flansch 6 verbundenen Nabe 30 drehbar und beschränkt axial verschieblich gelagert. Die axiale Beweglichkeit wird durch Anschläge 31, 32, 33 auf den Naben 27, 30 begrenzt. Eine Tellerfeder 34 zwischen den beiden Lagern 28, 29 druckbeaufschlagt die Nabe 27 in entgegengesetzter Richtung zur Druckrichtung der Feder 24.

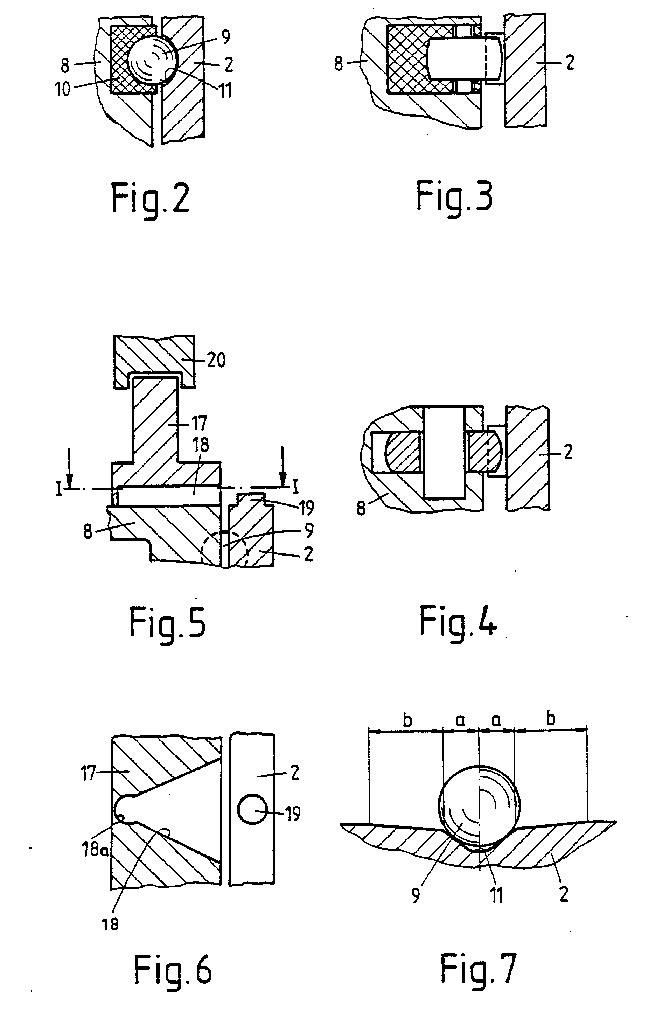

An Stelle der Ausbildung des Sperrers als Kugel 9 kann der Sperrer auch als Rolle, wie in Fig. 3 und 4 dargestellt ist, ausgeführt sein.

Die beschriebene drehmomentbegrenzende Kupplung arbeitet auf folgende Art und Weise :

Im Überlastfall verdreht sich die am Antrieb gekuppelte Nabe 1 mit der Scheibe 2 gegenüber dem Flansch 8. Auf dem ersten Abschnitt a einer in der Scheibe 2 ausgebildeten Steigkurve (vgl. Fig. 7) braucht der Flansch 8 nur gegen die Kraft der Feder 12 verschoben zu werden, weil ein am Flansch 8 angesetzter Topf 35 mit seinem Rand 36 noch nicht zur Anlage an einem Kragen 37 gekommen ist. Im zweiten Abschnitt b dagegen muß auch die Kraft der Feder 24 überwunden werden. Damit keine größeren Kräfte nötig sind, ist die Steilheit im zweiten Abschnitt b kleiner gewählt. Auf diesem zweiten Abschnitt b erfolgt die Lüftung der Kupplung 6, 21 bis 23, 26. Sobald die Kupplung 6, 21 bis 23, 26 gelüftet ist, kann sich die Nabe 1 frei gegenüber dem Abriebsteil 27 drehen. Die Verdrehung der Teile 2, 8 des Rastgesperres nach erfolgter Lüftung wird begrenzt durch den Anschlag 15, 16.

Sobald die Kupplung 6, 21 bis 23, 26 gelüftet wird, wird nicht nur der Flansch 22 mit seinem Belag 23 von der Scheibe 26 abgehoben, sondern es wird auch die Scheibe 26 vom Belag 21 des anderen Flansches 6 der Kupplungshälfte abgehoben, und zwar dadurch, daß die Tellerfeder 34 die Nabe 27 zusammen mit der Scheibe 26 bis zur Anlage des Lagers 28 am Anschlag 31 verschiebt.

Soll nun die Kupplung wieder eingeschaltet werden, dann braucht lediglich der Stellring 17 axial verschoben zu werden. Die Nase 19 wird von der Weiche 18 erfaßt und bei weiterer Verschiebung wird der Teil 2 gegenüber dem Teil 8 zurückgedreht, so daß der Sperrer 9 wieder einrasten kann. Die damit verbundene Axialverschiebung des Flansches 8 unter der Wirkung der Schraubenfeder 12 hat zur Folge, daß auch die Kupplung 6, 20 bis 23, 26 unter der Wirkung der Schraubenfeder 24 wieder eingeschaltet wird.

Sofern ein Ansprechen der Kupplung bei Überschreiten des Grenzmomentes nicht gewünscht wird, wird der Stellring 17 axial so weit verschoben, bis daß die Nase 19 in der Ausnehmung 18a sich befindet. Da die Seitenflanken der Ausnehmung 18a senkrecht zur Richtung des wirksamen Drehmomentes liegen, wird das Drehmoment von dem Flansch 2 über die Nase 19 und die Ausnehmung 18a auf den Flansch 8 übertragen. Der sonst über die Rast 9 erfolgende Kraftfluß wird damit umgeleitet, so daß das Rastgesperre bei Überschreiten des Grenzmomentes nicht ansprechen kann.

Die mit der Erfindung erzielten Vorteile bestehen darin, daß im Überlastfall die Kupplung sehr schnell anspricht. Da das Rastgesperre als Auslöseorgan wirkt, die Kupplung aber eine Reibungs- oder stirnverzahnte Kupplung ist, die nach Auslösen voll entkuppelt ist, sind beim Auslösen nur geringe Reibungskräfte zu überwinden und nach Auslösen läuft die Überlastkupplung beliebig lange, ohne daß damit ein Verschleiß oder eine andersartige Belastung der Kupplung verbunden ist. Auch läßt sich die Kupplung von außen leicht und schnell wieder einschalten.

**Patentansprüche**

1. Drehmomentbegrenzende Kupplung mit zwei gegen die Kraft einer axial wirkenden ersten Feder (24) außer Eingriff bringbaren Kupplungshälften (22, 23) und einem im Übertragungsweg angeordneten, aus zwei über eine federbelastete Rast (11) in Eingriff gehaltenen Teilen bestehenden Rastgesperre (2, 8, 9, 11, 12), dessen bei Überschreiten des Grenzmomentes ausrastbar und axial verstellbarer Teil auf die verstellbare Kupplungshälfte (22) einwirkt, wobei dem Sperrer (9) des Rastgesperres (2, 8, 9, 11, 12) eine Steigkurve zugeordnet ist, deren Steilheit auf dem ersten Abschnitt (a) des Verstellweges größer als auf dem sich daran anschließenden Abschnitt (b) ist, dadurch gekennzeichnet, daß das Rastgesperre (2, 8, 9, 11, 12) alleine von einer zweiten Feder (12) beaufschlagt ist, die beim Ausrasten des Rastgesperres (2, 8, 9, 11, 12) auf dem ersten Abschnitt (a) des Verstellweges des verstellbaren Teiles (8) allein wirksam ist und erst auf dem sich daran anschließenden Abschnitt (b) mit der ersten Feder (24) zusammen das Lüften der Kupplung bewirkt.

2. Kupplung nach Anspruch 1, dadurch gekennzeichnet, daß die mit dem axial verstellbaren Teil (8) des Rastgesperres (2, 8, 9, 11, 12) drehfest verbundene Kupplungshälfte (6, 21-25) aus zwei die andere Kupplungshälfte (26) mittels der Kraft der Feder (24) zwischen sich einklemmenden Teilen (6, 21-23) besteht, von denen ein Teil (6, 21) axial unverschieblich ist und als Widerlager für die das andere Teil (22, 23) abstützende Feder (24) dient.

3. Kupplung nach Anspruch 1 oder 2, dadurch gekennzeichnet, daß auf die andere Kupplungshälfte (22) eine weitere Feder (34) in Lüftungsrichtung einwirkt, deren Federkraft kleiner als die Kraft der in Gegenrichtung wirkenden Feder (24) der einen Kupplungshälfte (6, 21-25) ist.

4. Kupplung nach Anspruch 3, dadurch gekennzeichnet, daß die axiale Beweglichkeit der anderen Kupplungshälfte (26) durch einen Anschlag (32) auf ein Spiel begrenzt ist, das kleiner als das gesamte Lüftungsspiel zwischen den beiden Teilen (6, 21-23) der anderen Kupplungshälfte ist.

5. Kupplung nach einem der Ansprüche 1 bis 4, dadurch gekennzeichnet, daß der gegenseitige Verdrehwinkel der beiden Teile (2, 8) des Rastgesperres (2, 8, 9, 11, 12) durch einen Anschlag (15, 16) begrenzt ist.

6. Kupplung nach Anspruch 5, dadurch gekennzeichnet, daß ein Schaltring (17) unverdrehbar und axial verschieblich auf einem Teil (8) des Rastgesperres (2, 8, 9, 11, 12) angeordnet ist und eine Weiche (18) aufweist, die mit einer Nase (19) am anderen Teil (2) des Rastgesperres (2, 8, 9, 11, 12) derart zusammenwirft, daß das ausgerastete andere Teil (2) durch Axialverschiebung des Schaltringes (17) in die Raststellung zurückgeführt wird.

7. Kupplung nach Anspruch 6, dadurch gekennzeichnet, daß die Weiche (18) des Schaltringes (17) eine solche Ausnehmung (18a) für die Aufnahme der Nase (19) am anderen Teil (2) des Rastgesperres (2, 8, 9, 11, 12) hat, daß der Schaltring (17) in seiner axial verschobenen Stellung und das andere Teil in Drehrichtung formschlüssig miteinander verriegelt sind.

8. Kupplung nach einem der Ansprüche 1 bis 7, dadurch gekennzeichnet, daß die Steilheit eines jeden der Abschnitte (a, b) derart bestimmt ist, daß die Drehmomente zum gegenseitigen Verdrehen der beiden Teile (2, 8), unter Berücksichtigung der auf dem ersten Abschnitt (a) allein zu überwindenden Kraft der das Rastgesperre (2, 8, 9, 11, 12) beaufschlagenden Feder (12) und auf dem zweiten Abschnitt (b) der Summe der zu überwindenden Kräfte dieser Feder (12) und der auf die Kupplung (6, 21-26) einwirkenden Feder (24) im wesentlichen gleich ist.

9. Kupplung nach einem der Ansprüche 1 bis 8, dadurch gekennzeichnet, daß der Sperrer des Rastgesperres (2, 8, 9, 11, 12) eine oder mehrere frei drehbare Kugeln (9) oder Rollen sind.

## Claims

1. Torque-limiting clutch having two clutch halves (22, 23) which can be disengaged against the force of a first spring (24) acting axially, and a notch locking mechanism (2, 8, 9, 11, 12) comprising two parts which are held in the engaged position *via* a spring-biassed notch (11) and of which the part that can be snapped out and axially displaced when the limit moment is exceeded acts on the adjustable clutch half (22), there being associated with the lock (9) of the notch locking mechanism (2, 8, 9, 11, 12) a rising curve, the steepness of which over the first portion (a) of the adjusting path is greater than over the portion (b) contiguous therewith, characterised in that the notch locking mechanism (2, 8, 9, 11, 12) alone is acted upon by a second spring (12) which, when the notch locking mechanism (2, 8, 9, 11, 12) snaps out, is alone effective over the first portion (a) of the adjusting path of the adjustable part (8) and acts together with the first spring (24) only over the portion (b) contiguous therewith to release the clutch.

2. Clutch according to claim 1, characterised in that the clutch half (6, 21-25) connected so that it cannot turn to the axially adjustable part (8) of the notch locking mechanism (2, 8, 9, 11, 12) comprises two parts (6, 21-23) which clamp the other clutch half (26) between them by means of the force of the spring (24) and one part (6, 21) of which is axially immovable and serves as abutment for the spring (24) supporting the other part (22, 23).

3. Clutch according to claim 1 or 2, characterised in that there acts on the other clutch half (22) in the releasing direction a further spring (34), the spring force of which is less than the force of the spring (24) of the first clutch half (6, 21-25) acting in the opposite direction.

4. Clutch according to claim 3, characterised in that the axial movability of the other clutch half (26) is limited by a stop (32) to a play that is smaller than the total releasing play between the two parts (6, 21-23) of the other half of the clutch.

5. Clutch according to one of claims 1 to 4, characterised in that the mutual angle of twisting of the two parts (2, 8) of the notch locking mechanism (2, 8, 9, 11, 12) is limited by a stop (15, 16).

6. Clutch according to claim 5, characterised in that a switch ring (17) is arranged so that it cannot rotate but is axially displaceable on a part (8) of the notch locking mechanism (2, 8, 9, 11, 12) and has a turned out portion (18) which so cooperates with a nose (19) on the other part (2) of the notch locking mechanism (2, 8, 9, 11, 12) that the other part (2), when snapped out, is conveyed back into the notch position by axial displacement of the switch ring (17).

7. Clutch according to claim 6, characterized in that the turned out portion (18) of the switch ring (17) has a recess (18a) for accommodating the nose (19) on the other part (2) of the notch locking mechanism (2, 8, 9, 11, 12) such that the switch ring (17) in its axially displaced position and the other part are positively locked together in the direction of rotation.

8. Clutch according to one of claims 1 to 7, characterised in that the steepness of each of the portions (a, b) is so determined that the torque for the mutual turning of the two parts (2, 8) is substantially equal taking into account the force, to be overcome only in the first portion (a), of the spring (12) acting on the notch locking mechanism (2, 8, 9, 11, 12) and, over the second portion (b), the sum of the forces to be overcome of this spring (12) and the spring (24) acting on the clutch (6, 21-26).

9. Clutch according to one of claims 1 to 8, characterised in that the lock of the notch locking mechanism (2, 8, 9, 11, 12) comprises one or more freely rotatable balls (9) or rollers.

## Revendications

1. Embrayage à couple de rotation limité avec deux moitiés d'embrayage (22, 23) pouvant être amenées hors de prise par un premier ressort (24) agissant axialement et un cliquet d'arrêt (2, 8, 9, 11, 12) disposé sur le trajet de transmission et constitué de deux parties maintenues en prise par un cran d'arrêt (11) chargé par ressort, dont la partie mobile axialement et pouvant venir hors de prise lors d'un dépassement du couple limite agit sur la moitié d'embrayage (22) mobile, une came de montée étant adjointe à l'arrêt (9) du cliquet (2, 8, 9, 11, 12), dont la pente sur la première section (a) du trajet de déplacement est plus grande que sur la section (b) qui s'y raccorde, caractérisé par le fait que le cliquet d'arrêt (2, 8, 9, 11, 12) est seul soumis à l'action d'un second ressort (12) qui agit seul sur la première section (a) du trajet de déplacement de la pièce mobile (8) et agit conjointement au premier ressort (24) pour soulever l'embrayage seulement sur la section (b) qui s'y raccorde.

2. Embrayage selon la revendication 1, caractérisé par le fait que la moitié d'embrayage (6, 21-25) solidaire en rotation de la partie (8) mobile axialement du cliquet d'arrêt (2, 8, 9, 11, 12) est constituée de deux pièces (6, 21-23) se serrant contre l'autre moitié d'embrayage (26) par la force d'un ressort (24), dont une partie (6, 21) est fixe axialement et sert de butée au ressort (24) en appui sur l'autre partie (22, 23).

3. Embrayage selon la revendication 1 ou 2, caractérisé par le fait qu'un ressort supplémentaire (34) agit en direction de soulèvement sur l'autre moitié (22) d'embrayage, dont la force de ressort est inférieure à la force du ressort (24) de la première moitié d'embrayage (6, 21-25) agissant en sens contraire.

4. Embrayage selon la revendication 3, caractérisé par le fait que la capacité de déplacement axial de l'autre moitié (22) d'embrayage est limitée par une butée (32) à un jeu qui est inférieur au jeu de soulèvement total des deux parties (6, 21-23) de l'autre moitié d'embrayage.

5. Embrayage selon l'une des revendications 1 à 4, caractérisé par le fait que l'angle de torsion relatif des deux parties (2, 8) du cliquet d'arrêt (2, 8, 9, 11, 12) est limité par une butée (15, 16).

6. Embrayage selon la revendication 5, caractérisé par le fait qu'une bague de manœuvre (17) est disposée fixe en rotation et coulissante axialement sur une partie (8) du cliquet d'arrêt (2, 8, 9, 11, 12) et présente un dispositif d'aiguillage (18) qui coopère avec un bec (19) sur l'autre partie (2) du cliquet d'arrêt (2, 8, 9, 11, 12) de telle manière que l'autre partie (2) désencliquetée est ramenée en position d'arrêt par coulissement axial de la bague de manœuvre (17).

7. Embrayage selon la revendication 6, caractérisé par le fait que le dispositif d'aiguillage (18) de la bague de manœuvre (17) présente un évidement (18a) pour recevoir le bec (19) sur l'autre partie (2) du cliquet d'arrêt (2, 8, 9, 11, 12) tel que la bague de manœuvre (17), dans sa position déplacée axialement et l'autre pièce sont verrouillées l'une avec l'autre par coopération de forme dans le sens de rotation.

8. Embrayage selon l'une des revendications 1 à 7, caractérisé par le fait que la pente de chacune des sections (a, b) est déterminée de manière que les couples de rotation pour la rotation relative des deux parties (2, 8), en considération de la force du ressort (12) à surmonter agissant seul sur le cliquet d'arrêt (2, 8, 9, 11, 12) sur la première section (a) et la somme des forces à surmonter, sur la seconde section (b), de ce ressort (12) et du ressort (24) agissant sur l'embrayage (6, 21-26) sont sensiblement égaux.

9. Embrayage selon l'une des revendications 1 à 8, caractérisé par le fait que l'arrêt du cliquet d'arrêt (2, 8, 9, 11, 12) est constitué par une ou plusieurs billes (9) ou rouleaux libres en rotation.

Fig.1

0 108 974

Fig.2

Fig.3

Fig.5

Fig.4

Fig.6

Fig.7

2